Europäisches Patentamt

European Patent Office

Office européen des brevets

(11) Veröffentlichungsnummer : **0 115 790**
**B1**

(12) **EUROPÄISCHE PATENTSCHRIFT**

(45) Veröffentlichungstag der Patentschrift :
15.04.87

(21) Anmeldenummer : 84100306.4

(22) Anmeldetag : 13.01.84

(51) Int. Cl.⁴ : **F 16 C 13/00**

(54) **Durchbiegungseinstellwalze.**

(30) Priorität : 28.01.83 CH 490/83

(43) Veröffentlichungstag der Anmeldung :
15.08.84 Patentblatt 84/33

(45) Bekanntmachung des Hinweises auf die Patenterteilung : 15.04.87 Patentblatt 87/16

(84) Benannte Vertragsstaaten :
AT BE DE FR GB IT LU NL SE

(56) Entgegenhaltungen :
US-A- 3 587 152
US-A- 3 802 044
US-A- 4 058 877

(73) Patentinhaber : Sulzer - Escher Wyss AG
Hardstrasse 319
CH-8023 Zürich (CH)

(72) Erfinder : Lehmann, Rolf
Grüendlerstrasse 12
CH-8964 Rudolfstetten (CH)

(74) Vertreter : Paschedag, Hansjoachim et al
c/o Sulzer - Escher Wyss AG Patentabteilung Postfach
CH-8023 Zürich (CH)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Durchbiegungseinstellwalze mit einem um einen nicht-rotierenden Träger rotierbaren Walzenmantel, der mit wenigstens zwei parallelen, sich in Achsenrichtung erstreckenden Reihen von Stützelementen gegen den Träger abgestützt ist.

Solche Durchbiegungseinstellwalzen sind beispielsweise aus US-A-3 587 152 bekannt und werden beispielsweise in Walzvorrichtungen zum Walzen von Metall, beispielsweise Aluminium oder Stahl, oder von Kunststoffolien sowie von Papier- oder Textilbahnen oder in Druckmaschinen verwendet. Hierbei ist es häufig erforderlich, die Anpresskraft der einzelnen Stützelemente an verschiedenen Punkten der Presslinie oder Achse individuell und unabhängig voneinander einzustellen und zu regeln. Dies geschieht durch getrennte Versorgung der Stützelemente mit einem Druckmittel, wobei der Druck für die einzelnen Stützelemente unabhängig voneinander einstellbar und regelbar ist.

Bei vorbekannten Durchbiegungseinstellwalzen war die Zahl der Regelpunkte in Achsenrichtung begrenzt und durch die Anzahl der Stützelemente gegeben. Auch bei Walzen mit mehreren parallelen Reihen von Stützelementen war keine Verbesserung vorgesehen, da jeweils zwei oder mehrere Stützelemente am gleichen Achsenpunkt abgestützt waren. Wenn bei Walzvorrichtungen, die mit solchen Durchbiegungseinstellwalzen versehen waren, die Regelung der Anpresskraft für breite Materialbahnen zwar fein genug war, so standen beim Uebergang auf schmalere Materialbahnen nur eine geringere Anzahl von Regelpunkten zur Verfügung, so dass in diesem Fall die Regelung zu ungenau war, das heisst, dass sich solche Walzvorrichtungen nicht ohne Schwierigkeiten auf schmalere Materialbahnen umstellen liessen.

Die Erfindung setzt sich die Aufgabe, die erwähnten Nachteile des Standes der Technik zu beseitigen und insbesondere eine Durchbiegungseinstellwalze zu schaffen, bei der eine verbesserte, insbesondere feinere Regelung der Anpresskraft an verschiedenen Punkten in Achsenrichtung möglich ist und mit der sich auch Materialbahnen verschiedener Breite mit verbesserter Regelgenauigkeit walzen lassen.

Die Erfindung ist dadurch gekennzeichnet, dass zumindest ein Teil der Stützelemente einer Reihe gegenüber den Stützelementen einer anderen Reihe in Achsenrichtung versetzt angeordnet sind.

Vorteilhaft ist es dabei, um eine möglichst grosse Anpresskraft erzeugen zu können, wenn sich die Stützelemente der einen Reihe mit den Stützelementen der anderen Reihe überlappen.

Es kann auch günstig sein, wenn sich eine Reihe von Stützelementen über eine möglichst grosse Länge der Walze, in Achsenrichtung gesehen, erstreckt, während die andere Stützquellen-Reihe eine kürzere Länge aufweist und nur den Teil der Walze einnimmt, mit dem schmalere Materialbahnen gewalzt werden, beispielsweise nur das Mittelstück der Walze.

Die Stützelemente können zweckmässigerweise als hydrostatische, mit einem geeigneten Druckmittel versorgte Stützelemente ausgebildet sein, wie beispielsweise in US-A-3 802 044 beschrieben. Die Stützelemente der anderen Reihe können ebenfalls als analoge hydrostatische Stützelemente ausgebildet sein, oder aber auch als normale, mit Druckmittel versorgte, in einer zylindrischen Bohrung bewegliche hydrodynamische Lagerelemente.

Die Erfindung wird anhand der in den Figuren dargestellten Ausführungsbeispiele beschrieben.

Figur 1 zeigt eine Walzvorrichtung mit einer erfindungsgemässen Durchbiegungseinstellwalze im Axialschnitt.

Figur 2 zeigt die in Fig. 1 wiedergegebene Durchbiegungseinstellwalze im Schnitt entlang der Ebene II-II.

Figuren 3-5 zeigen die Anordnung von Stützelementen in drei verschiedenen Ausführungsformen von Durchbiegungseinstellwalzen.

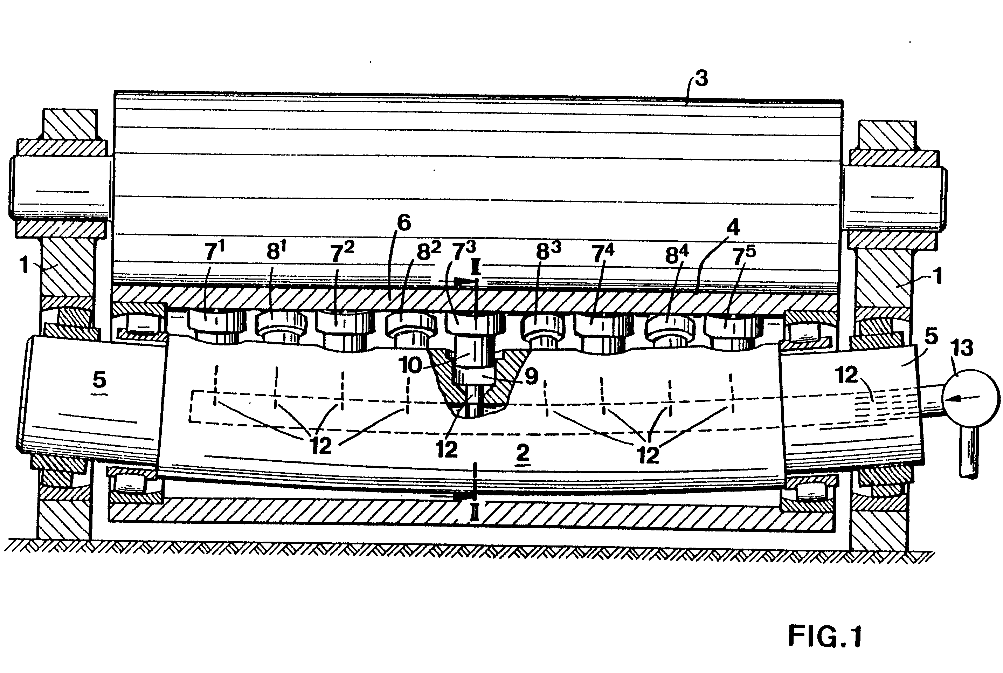

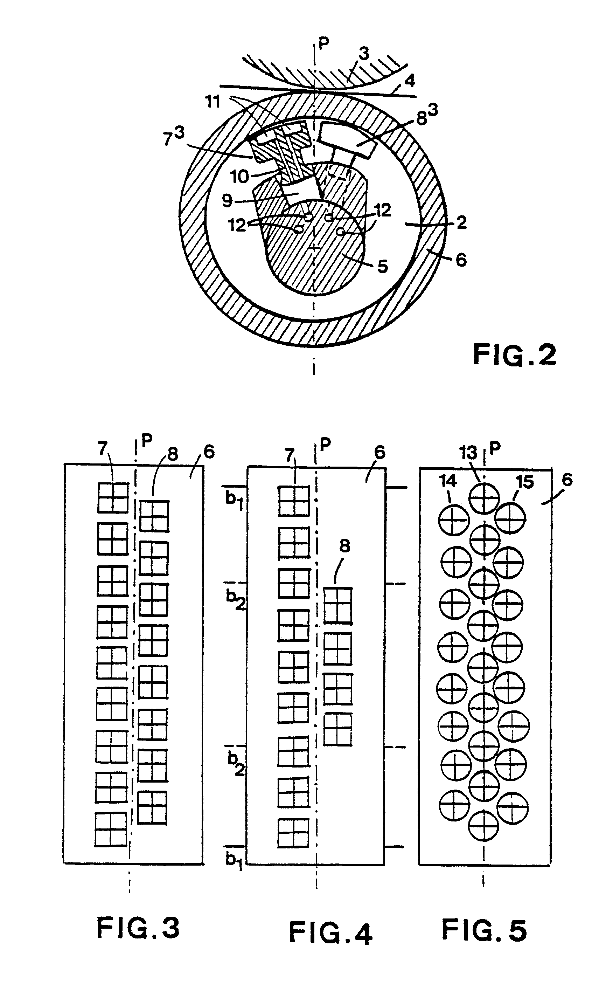

Die Figuren 1 und 2 zeigen eine Walzvorrichtung mit zwei in einem Ständer 1 angeordneten Walzen 2 und 3, zwischen denen eine Materialbahn 4 gewalzt wird. Während die untere Walze 2 als Durchbiegungseinstellwalze mit einem nicht-rotierenden Träger 5 und einem um diesen rotierbaren Walzenmantel 6 ausgebildet ist, ist die obere Walze 3 als im Ständer 1 drehbar gelagerte Massivwalze ausgeführt. Statt dessen kann die obere Walze 3 jedoch auch ebenfalls als Durchbiegungseinstellwalze analog zur unteren Walze 2 ausgebildet sein.

Bei der Durchbiegungseinstellwalze ist der nicht-rotierende Träger 5 gegenüber dem um den Träger rotierenden Walzenmantel 6 durch zwei Reihen von Stützelementen $7^1$-$7^5$ und $8^1$-$8^4$ abgestützt. Die Stützelement-Reihen $7^1$-$7^5$ und $8^1 8^4$ bilden je eine parallele, sich in Achsenrichtung erstreckende Reihe, wobei im dargestellten Beispiel die Stützelement-Reihen $7^1$-$7^5$ und $8^1$-$8^4$ jeweils symmetrisch auf beiden Seiten der Pressebene P angeordnet sind. Die Anordnung ist dabei so getroffen, dass jeweils ein Stützelement der einen Stützelement-Reihe in Achsenrichtung zwischen zwei benachbarten Stützelementen der anderen Reihe liegt, beispielsweise das Stützelement $8^1$ zwischen den Stützelementen $7^1$ und $7^2$ oder das Stützelement $7^4$ zwischen den Stützelementen $8^3$ und $8^4$. Die Stützelemente der einen Reihe sind also genau in den Lücken der anderen Reihe vorgesehen. Statt dessen kann die versetzte oder lückenweise Anordnung der Stützelemente der beiden Reihen auch nur über einen Teil der Walzenlänge, beispielsweise im Mittelteil, vorgesehen sein.

Die Stützelemente können, wie in Fig. 2 im Detail anhand des Stützelementes $7^3$ gezeigt, als an sich bekannte hydrostatische Stützelemente ausgeführt sein und einen in einer zylindrischen Bohrung 9 beweglichen Kolben 10 aufweisen, der an seiner Lagerfläche Drucktaschen 11 aufweist, die über Drosselbohrungen mit dem mit einem hydraulischen Druckmittel versorgten Zylinderraum 9 in Verbindung stehen. Die andere Reihe von Stützelementen $8^1$ bis $8^4$ kann aus klassischen hydrodynamischen ebenfalls mit einem Druckmittel versorgten Lagerelementen bestehen, oder gleichfalls hydrostatische Stützelemente aufweisen.

Die einzelnen Stützelemente $7^1$ bis $7^5$ und $8^1$ bis $8^4$, bzw. deren Druckzylinder 9 werden über individuelle Bohrungen oder Leitungen 12 getrennt voneinander über eine Regeleinrichtung 13 mit einem geeigneten hydraulischen Druckmittel versorgt. Dabei ist der Druck des Druckmittels für die einzelnen Stützelemente getrennt voneinander einstellbar.

Mit der beschriebenen Anordnung wird erreicht, dass für die Einstellung und Regelung des Anpressdruckes der beiden Walzen 2 und 3 gegeneinander in der Pressebene P nahezu doppelt soviel Regelungspunkte zur Verfügung stehen, wie bei nur einer einzigen Reihe von Stützelementen. Die Regelung des Anpressdruckes kann daher erheblich feiner vorgenommen werden, als mit vorbekannten Durchbiegungseinstellwalzen.

Fig. 3 zeigt in schematischer Form eine Anordnung von zwei Reihen von Stützelementen 7 und 8 symmetrisch zur Pressebene P, ähnlich dem vorstehend beschriebenen Ausführungsbeispiel. Zum Unterschied dazu besitzen die Lagerflächen der Stützelemente eine grössere Ausdehnung mit nur kleinen Lücken zwischen den Stützelementen jeder Reihe, so dass sich die Stützelemente der einen Reihe mit den Stützelementen der anderen Reihe in Achsenrichtung überlappen. Der Vorteil dieser Ausbildung liegt darin, dass für die Abstützung und Lagerung des Walzenmantels eine grössere Stützfläche zur Verfügung steht, so dass ein grösserer Anpressdruck erreicht werden kann.

Fig. 4 zeigt eine abgewandelte Ausführung, bei der die eine Stützelement-Reihe 7 sich über die ganze Walzenlänge erstreckt, während die Stützelemente der anderen Reihe 8 nur im Mittelteil der Walze 2 vorgesehen sind. Eine solche Ausbildung ist insbesondere bei Walzvorrichtungen von Vorteil, mit der Materialbahnen verschiedener Breite verarbeitet werden sollen. Während bei einer breiten Materialbahn b1 auch bei nur einer Reihe von Stützelementen 7 eine genügend grosse Zahl von Regelpunkten zur Verfügung steht, wäre diese bei einer schmaleren Materialbahn b2 zu gering. Durch die Hinzufügung der zweiten Stützelement-Reihe 8 im Mittelteil der Walze wird jedoch erreicht, dass auch bei einer schmalen Materialbahn eine genügend grosse Zahl von Regelpunkten zur Verfügung steht.

Fig. 5 zeigt ein abgewandeltes Ausführungsbeispiel mit drei Stützelement-Reihen 13, 14, 15, wobei die mittlere Reihe 13 in der Pressebene P liegt, während die anderen Reihen 14, 15 seitlich von der Pressebene und zu dieser symmetrisch liegen. Die kreisförmige Ausbildung der Lagerflächen erlaubt dabei eine verzahnte Anordnung der Stützelemente der verschiedenen Reihen, so dass der Abstand der Mittellinien der einzelnen Stützelement-Reihen kleiner als der Stützelement-Durchmesser ist und die Anpresskraft besser auf die Pressebene konzentriert ist. Ausserdem treten bei dieser Anordnung keine Unsymmetrien auf.

## Patentansprüche

1. Durchbiegungseinstellwalze mit einem um einen nicht-rotierenden Träger (2) rotierbaren Walzenmantel (6), der mit wenigstens zwei parallelen, sich in Achsenrichtung erstreckenden Reihen von Stützelementen ($7^1$-$7^5$, $8^1$-$8^4$) gegen den Träger (2) abgestützt ist, dadurch gekennzeichnet, dass zumindest ein Teil der Stützelemente einer Reihe ($8^1$-$8^4$) gegenüber den Stützelemente einer anderen Reihe ($7^1$-$7^5$) in Achsenrichtung versetzt angeordnet sind.

2. Durchbiegungseinstellwalze nach Anspruch 1, dadurch gekennzeichnet, dass die Stützelemente der einen Reihe ($8^1$-$8^4$) in Achsenrichtung in den Lücken der Reihe der anderen Stützelemente ($7^1$-$7^5$) angeordnet sind.

3. Durchbiegungseinstellwalze nach Anspruch 1, dadurch gekennzeichnet, dass sich die Stützelemente der einen Reihe (8) in Achsenrichtung mit den Stützelementen der anderen Reihe (7) teilweise überlappen.

4. Durchbiegungseinstellwalze nach Anspruch 3, dadurch gekennzeichnet, dass die Stützelemente einer Reihe (14, 15) mit den Stützelementen einer anderen Reihe (13) verzahnt angeordnet sind.

5. Durchbiegungseinstellwalze nach einem der Ansprüche 1-4, dadurch gekennzeichnet, dass sich eine Reihe von Stützelementen (7) über eine von der anderen Reihe von Stützelementen (8) verschiedene Länge (b1, b2) des Walzenmantels (6) in Achsenrichtung erstreckt.

6. Durchbiegungseinstellwalze nach Anspruch 5, dadurch gekennzeichnet, dass sich eine Reihe von Stützelementen (7) wenigstens angenähert über die gesamte Länge des Walzenmantels (6) erstreckt.

7. Durchbiegungseinstellwalze nach Anspruch 6, dadurch gekennzeichnet, dass sich die andere Reihe von Stützelementen (8) nur über den mittleren Teil (b2) des Walzenmantels (6) erstreckt.

8. Durchbiegungseinstellwalze nach einem der Ansprüche 1-7, dadurch gekennzeichnet, dass die Stützelemente ($7^1$-$7^5$, $8^1$-$8^4$) über Leitungen (12) wenigstens zum Teil unabhängig voneinander mit einem hydraulischen Druckmittel mit einem bestimmten Druck versorgt sind.

9. Durchbiegungseinstellwalze nach Anspruch 8, dadurch gekennzeichnet, dass die Leitungen (12) an eine Regeleinrichtung (13) zur unabhängigen Einstellung des Druckes für die einzelnen Stützelemente ($7^1$-$7^5$, $8^1$-$8^4$) angeschlossen sind.

10. Durchbiegungseinstellwalze nach einem der Ansprüche 1-9, dadurch gekennzeichnet, dass wenigstens ein Teil der Stützelemente (7¹-7⁵, 8¹-8⁴) als Stützelemente mit einem in einem mit Druckmittel versorgten Zylinder (9) beweglichen Kolben (10) ausgebildet ist, wobei der Kolben (10) eine mit Drucktaschen (11) versehene Lagerfläche aufweist und die Drucktaschen (11) über Drosselbohrungen mit dem Zylinderraum (9) in Verbindung stehen.

pressure medium, the piston (10) having a bearing surface which is provided with pressure pockets (11) and the pressure pockets (11) communicating with the cylinder chamber (9) via throttle bores.

**Claims**

1. Deflection controlled roll with a roller shell (6) which is rotatable about a non-rotary carrier (2) and which is supported with respect to the carrier (2) by at least two parallel rows of support elements (7¹-7⁵, 8¹-8⁴) extending in its axial direction, characterised in that at least some of the support elements of one row (8¹-8⁴) are arranged so as to be staggered with respect to the support elements of another row (7¹-7⁵) in its axial direction.

2. Deflection controlled roll according to Claim 1, characterised in that the support elements of one row (8¹-8⁴) are arranged in its axial direction in the gaps of the row of the other support elements (7¹-7⁵).

3. Deflection controlled roll according to Claim 1, characterised in that the support elements of one row (8) partially overlap with the support elements of the other row (7) in its axial direction.

4. Deflection controlled roll according to Claim 3, characterised in that the support elements of one row (14, 15) are arranged so as to be stepped with the support elements of another row (13).

5. Deflection controlled roll according to one of Claims 1-4, characterised in that one row of support elements (7) extends over a different length (b1, b2) of the roller shell (6) from the other row of support elements (8) in the axial direction.

6. Deflection controlled roll according to Claim 5, characterised in that one row of support elements (7) extends at least approximately over the entire length of the roller shell (6).

7. Deflection controlled roll according to Claim 6, characterised in that the other row of support elements (8) extends only over the central part (b2) of the roller shell (6).

8. Deflection controlled roll according to one of Claims 1-7, characterised in that the support elements (7¹-7⁵, 8¹-8⁴) are supplied with a hydraulic pressure medium at a particular pressure, via ducts (12) at least partially independently of each other.

9. Deflection controlled roll according to Claim 8, characterised in that the ducts (12) are connected to a regulating device (13) for the independent adjustment of the pressure for the individual support elements (7¹-7⁵, 8¹-8⁴).

10. Deflection controlled roll according to one of Claims 1-9, characterised in that at least some of the support elements (7¹-7⁵, 8¹-8⁴) are constructed as support elements with a piston (10) which is movable in a cylinder (9) supplied with

**Revendications**

1. Cylindre à réglage de flexion, du genre comportant une enveloppe cylindrique (6) pouvant tourner autour d'un support non rotatif (2) et qui prend appui contre ce support par l'intermédiaire d'au moins deux rangées parallèles et à orientation axiale d'éléments d'appui (7¹ à 7⁵, 8¹ à 8⁴), caractérisé par le fait qu'au moins une partie des éléments d'appui d'une rangée (8¹ à 8⁴) est décalée dans le sens axial par rapport aux éléments d'appui (7¹ à 7⁵) de l'autre rangée.

2. Cylindre à réglage de flexion selon la revendication 1, caractérisé par le fait que les éléments d'appui d'une rangée (8¹ à 8⁴) sont disposés dans les intervalles, dans le sens axial, laissés entre les éléments d'appui (7¹ à 7⁵) de l'autre rangée.

3. Cylindre à réglage de flexion selon la revendication 1, caractérisé par le fait que les éléments d'appui d'une rangée (8) recouvrent partiellement, dans le sens axial, les éléments d'appui de l'autre rangée (7).

4. Cylindre à réglage de flexion selon la revendication 3, caractérisé par le fait que les éléments d'appui d'une rangée (14, 15) sont disposés de façon à être imbriqués entre les éléments d'appui d'une autre rangée (13).

5. Cylindre à réglage de flexion selon l'une quelconque des revendications 1 à 4, caractérisé par le fait que l'une des rangées (7) d'éléments d'appui s'étend dans le sens axial sur une longueur (b¹, b²) de l'enveloppe cylindrique (6) qui diffère de celle de l'autre rangée (8) d'éléments d'appui.

6. Cylindre à réglage de flexion selon la revendication 5, caractérisé par le fait qu'une rangée d'éléments d'appui (7) s'étend au moins jusqu'à la presque totalité de la longueur de l'enveloppe cylindre (6).

7. Cylindre à réglage de flexion selon la revendication 6, caractérisé par le fait que l'autre rangée d'éléments d'appui (8) s'étend seulement sur la partie médiane (b²) de l'enveloppe cylindrique (6).

8. Cylindre à réglage de flexion selon l'une quelconque des revendications 1 à 7, caractérisé par le fait que les éléments d'appui (7¹ à 7⁵, 8¹ à 8⁴) sont alimentés en fluide hydraulique sous une pression déterminée par l'intermédiaire de conduites (12) au moins en partie indépendamment les uns des autres.

9. Cylindre à réglage de flexion selon la revendication 8, caractérisé par le fait que les conduites (12) sont reliées à un dispositif régulateur (13) qui pérmet le réglage indépendant de la pression pour les éléments d'appui individuels (7¹ à 7⁵, 8¹ à 8⁴).

10. Cylindre à réglage de flexion selon l'une quelconque des revendications 1 à 9, caractérisé par le fait qu'au moins une partie des éléments d'appui ($7^1$ à $7^5$, $8^1$ à $8^4$) sont réalisés sous forme de pistons coulissant dans des cylindres (9) alimentés en fluide sous pression, ces pistons étant pourvus d'une surface d'appui présentant des cavités de pression (11) reliées par des passages à étranglement (10) aux chambres des cylindres (9).

FIG.1

**FIG.2**

**FIG.3**          **FIG.4**          **FIG.5**

2